(19) 

**Europäisches Patentamt**
**European Patent Office**
**Office européen des brevets**

(11) **EP 4 592 779 A1**

(12) **EUROPEAN PATENT APPLICATION**
published in accordance with Art. 153(4) EPC

(43) Date of publication:
**30.07.2025 Bulletin 2025/31**

(21) Application number: **23882576.4**

(22) Date of filing: **23.10.2023**

(51) International Patent Classification (IPC):
*G05B 19/409* (2006.01)     *B23B 1/00* (2006.01)
*B23Q 17/00* (2006.01)     *G05B 19/4093* (2006.01)

(52) Cooperative Patent Classification (CPC):
**B23B 1/00; B23Q 17/00; G05B 19/409;**
**G05B 19/4093**

(86) International application number:
**PCT/JP2023/038153**

(87) International publication number:
**WO 2024/090371 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **24.10.2022   JP 2022169685**
                 **17.10.2023   JP 2023178815**

(71) Applicant: **DMG Mori Co., Ltd.**
**Yamatokoriyama-shi, Nara 639-1160 (JP)**

(72) Inventors:
• **TANEMOTO, Minoru**
  **Yamatokoriyama-shi, Nara 639-1160 (JP)**
• **SHIMODA, Naofumi**
  **Yamatokoriyama-shi, Nara 639-1160 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **NC PROGRAM CREATION**

(57)     An NC program creation device (132, 140) is configured to create an NC program to be executed by a machine tool (1) in which cutting chips are produced during cutting of a workpiece, and includes a reception unit (132) configured to receive a selection instruction in which a cutting chip length is selected, and a creation unit (143) configured to create an NC program including a G code or an M code for performing cutting so that cutting chips of the selected cutting chip length are produced, based on the selection instruction.

FIG. 12

**EP 4 592 779 A1**

## Description

[TECHNICAL FIELD]

The present invention relates to a device that creates an NC program for oscillation machining, the NC program being applicable to a machine tool including a rotation mechanism unit configured to rotate a cutting tool and a workpiece relative to each other along a circumferential direction of the workpiece, and a feed drive unit configured to cause relative feed movement between the cutting tool and the workpiece along a rotation axis, the machine tool being configured to enable breaking of cutting chips by reciprocally oscillating the cutting tool and the workpiece relative to each other along the rotation axis during feed movement by the feed drive unit, and also relates to a machine tool including the same.

[BACKGROUND ART]

A machine tool that performs turning, in general, machines a workpiece into a predetermined shape by rotating a cutting tool and the workpiece relative to each other along a circumferential direction of the workpiece while causing relative feed movement between the cutting tool and the workpiece along a rotation axis. However, there is a problem in that a long continuous cutting chip generated during the machining may damage the cutting tool or scratch the workpiece.

To solve this problem, for example, a machine tool disclosed in Patent Document 1 is configured to break cutting chips by executing oscillation machining control by a control unit during turning. In this oscillation machining control, cutting chips are broken by reciprocally driving the cutting tool and the workpiece relative to each other in the feed direction (i.e., along the rotation axis) during turning and by overlapping a portion of the workpiece being cut during the forward movement and a portion of the workpiece being cut during the backward movement. The relative rotation speed between the cutting tool and the workpiece and the number of reciprocal oscillations between the cutting tool and the workpiece for executing the oscillation machining control are manually set by a worker (see, for example, paragraph [0051] of Patent Document 1).

[PRIOR ART DOCUMENTS]

[PATENT DOCUMENTS]

Patent Document 1: International Publication WO2017/051745

[SUMMARY OF THE INVENTION]

[PROBLEM TO BE SOLVED]

In oscillation machining control, the greater the number of reciprocal oscillations per rotation between the cutting tool and the workpiece, the more frequently the cutting chips are broken, resulting in shorter cutting chip lengths produced during machining. However, the machine tool of Patent Document 1 requires a worker to manually set the number of reciprocal oscillations per rotation, which leads to a problem in that a worker who does not understand, for example, the relationship between the number of reciprocal oscillations and the cutting chip length may not be able to appropriately set the number of reciprocal oscillations. If the number of reciprocal oscillations is not appropriately set, problems may occur in that cutting chips become longer than expected, possibly causing damage to the cutting tool or the workpiece, or become shorter than expected, making the cutting chips more likely to scatter.

The present invention has been made in view of the above circumstances, and an object thereof is to enable a worker without accurate knowledge regarding oscillation machining control to easily set the cutting chip length.

[SOLUTION TO PROBLEM]

The present invention provides an NC program creation method, an NC program creation device, an NC program creation program, a display control device, a machine tool, and the like.

[ADVANTAGEOUS EFFECT OF THE INVENTION]

According to the present invention, even a worker who is not skilled in creating a machine tool program is able to easily create a program.

[BRIEF DESCRIPTION OF THE DRAWINGS]

[FIG. 1] FIG. 1 is an explanatory diagram illustrating a schematic configuration of a machine tool related to Embodiment 1.
[FIG. 2] FIG. 2 is an explanatory diagram illustrating an overview of oscillation machining control.
[FIG. 3] FIG. 3 is a block diagram showing a configuration of a control system of the machine tool.
[FIG. 4] FIG. 4 is a schematic view showing an example of a cutting chip length selection unit displayed on a touch panel.
[FIG. 5] FIG. 5 is a diagram showing an example of parameter data stored in a parameter storage unit.
[FIG. 6] FIG. 6 is a graph showing an example of trajectory of a cutting tool during oscillation machining.
[FIG. 7] FIG. 7 is a flowchart showing the details of oscillation machining control executed by a control device.
[FIG. 8] FIG. 8 is a diagram corresponding to FIG. 4 for Embodiment 2.

[FIG. 9] FIG. 9 is a diagram corresponding to FIG. 4 for Embodiment 3.

[FIG. 10] FIG. 10 is a schematic view showing an example of an input screen that is displayed on the touch panel when a free setting button is pressed in Embodiment 3.

[FIG. 11] FIG. 11 is an example of an input screen displayed on an operation panel of a machine tool of Embodiment 4.

[FIG. 12] FIG. 12 is a block diagram showing a configuration of the machine tool of Embodiment 4.

[FIG. 13A] FIG. 13A is an example of a graph screen displayed on the operation panel of the machine tool in Variation 1 of Embodiment 4.

[FIG. 13B] FIG. 13B is another example of the graph screen displayed on the operation panel of the machine tool in Variation 1 of Embodiment 4.

[FIG. 14] FIG. 14 is an example of an NC program created by a programming unit.

[FIG. 15] FIG. 15 is an example of a guidance screen displayed on the operation panel of the machine tool in Variation 2 of Embodiment 4.

[FIG. 16] FIG. 16 is a block diagram showing a configuration of the machine tool of Embodiment and its peripheral devices.

[DETAILED DESCRIPTION]

Particular embodiments of the present invention will be described below with reference to the drawings.

(Embodiment 1)

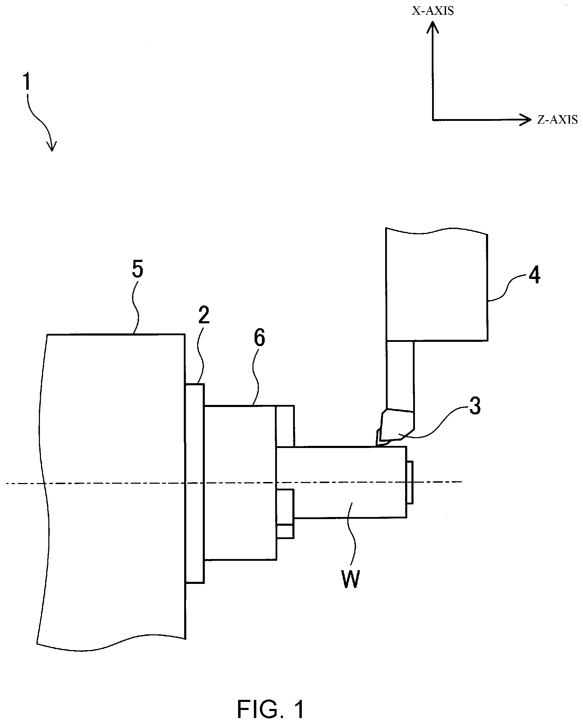

FIG. 1 is a schematic view showing an overview of a machine tool 1 in the present embodiment. This machine tool 1 is an NC lathe that performs turning by bringing a cutting tool 3 into contact with the circumferential surface of a workpiece W while rotating the workpiece W, and has a chip breaking function that breaks cutting chips produced during the turning by oscillating movement (advancing/retracting movement) of the cutting tool 3 in the feed direction (i.e., along the rotation axis of the workpiece W). Note that, in the following description, the direction along the rotation axis of the workpiece W is defined as the Z-axis direction, the vertical direction orthogonal to the Z-axis direction is defined as the X-axis direction, and the direction orthogonal to both the X-axis direction and the Z-axis direction is defined as the Y-axis direction.

The machine tool 1 has a spindle 2, a spindle headstock 5 that rotatably holds the spindle 2, the cutting tool 3, and a tool holding unit 4 that holds the cutting tool 3.

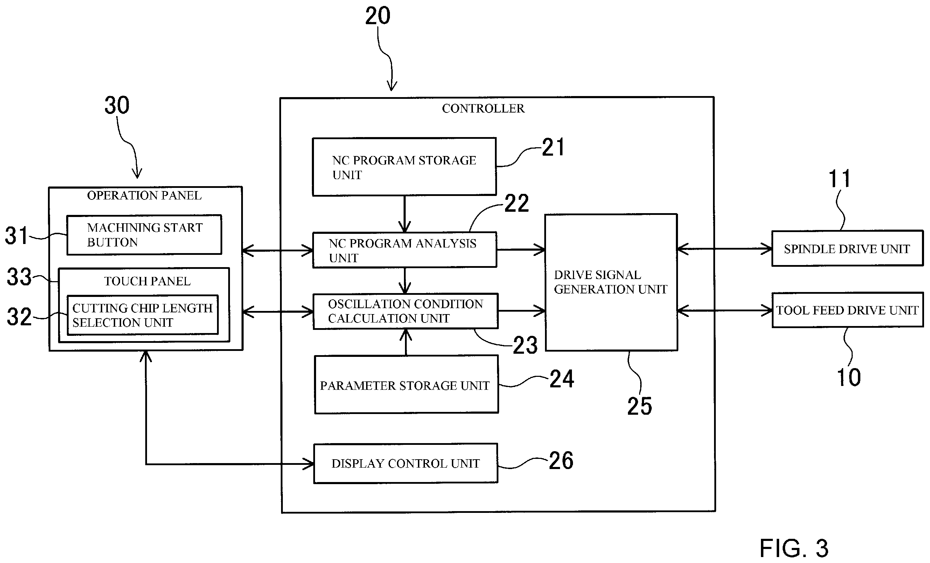

At a distal end portion of the spindle 2, a chuck 6 configured to grip the workpiece W is provided. The spindle headstock 5 incorporates a spindle motor (not shown) configured to rotationally drive the spindle 2, and is fixed on a bed (not shown) of the machine tool 1. The spindle motor is configured, for example, using a servo motor, and is driven by current supplied from a spindle drive amplifier (not shown). Note that the spindle drive amplifier supplies current to the spindle motor, according to a control signal transmitted from a later-described control device 20. The spindle motor and the spindle drive amplifier together constitute a spindle drive unit 11 (see FIG. 3 described later), and this spindle drive unit 11 functions as a rotation drive unit that rotates the cutting tool 3 and the workpiece W relative to each other along a circumferential direction of the workpiece W.

The cutting tool 3 is composed of a tool bit for a turning and is fixed to the tool holding unit 4. The tool holding unit 4 is moved in the X-axis direction, Y-axis direction, and Z-axis direction by a tool feed drive unit 10 (described later, see FIG. 3). The tool feed drive unit 10 includes an X-axis feed mechanism, a Y-axis feed mechanism, and a Z-axis feed mechanism (all of which are not shown) which perform feeding operation in the X-axis direction, Y-axis direction, and Z-axis direction, respectively. Each feed mechanism is configured, for example, by a combination of a ball screw and a servo motor. Further, the tool feed drive unit 10 is equipped with feed drive amplifiers (not shown), each of which is configured to supply current to the corresponding servo motor. Each feed drive amplifier supplies current to the corresponding servo motor according to a control signal transmitted from a later-described control device 20, and each servo motor is driven by the supplied current.

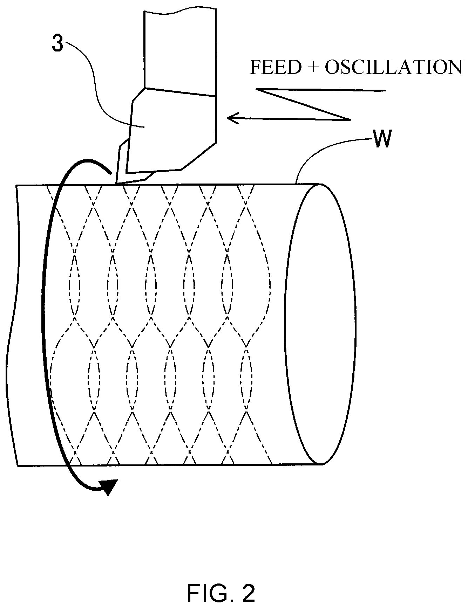

During the turning of the workpiece W, the workpiece W together with the spindle 2 rotates about an axis of the spindle 2, driven by the spindle drive unit 11, and the tool holding unit 4 is feed-moved in the Z-axis direction, driven by the tool feed drive unit 10. In the normal feed drive of the turning, for example, the tool holding unit 4 is driven in one direction from the distal end side to the proximal end side of the workpiece W. However, in the machine tool 1 of the present example, the tool holding unit 4 is driven while being caused to reciprocally oscillate (advance/retract) in the Z-axis direction. At this time, by overlapping a portion of the workpiece being cut during the forward movement and a portion of the workpiece being cut during the backward movement as shown by the two-dot chain line in FIG. 2, cutting chips are broken at the overlapping portions. In this way, the turning of the workpiece W is executed while breaking the cutting chips.

As shown in FIG. 3, the machine tool 1 has a control device (numerical control device) 20. The control device 20 is connected to an operation panel 30, the tool feed drive unit 10, and the spindle drive unit 11 so as to enable transmission and reception of signals.

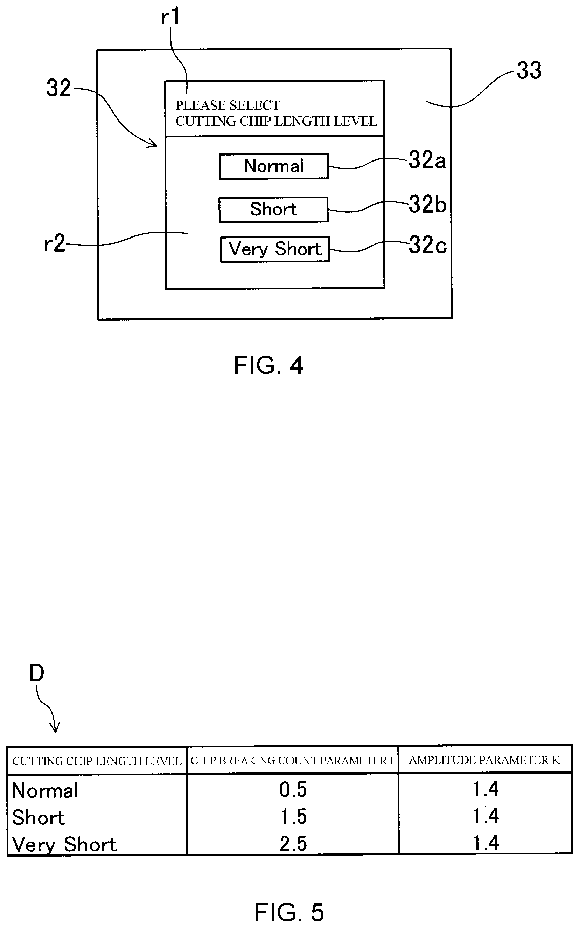

The operation panel 30 has an operation unit through which a worker instructs various operations of the machine tool 1 and performs various settings, and is configured to transmit operation signals to the control device 20 according to the worker's operation. The operation unit includes, for example, a machining start button 31 that causes the machine tool 1 to start a machining operation based on an NC program, and a cutting chip length selection unit 32 that allows selection of the length level of cutting chips to be produced during turning. The cutting chip length selection unit 32 is displayed on a touch panel 33 (see FIG. 4) provided to the operation panel 30, under control by a later-described display control unit 26. This touch panel 33 functions as a display unit configured to display an operation screen, and also functions as an input unit that allows entry of information (data) via the operation screen. Further, the cutting chip length selection unit 32 is a selection screen as an operation screen, and functions as a reception unit that receives selection instructions.

FIG. 4 is a schematic view showing an example of the cutting chip length selection unit 32 displayed on the touch panel 33. The cutting chip length selection unit 32 includes a message display region r1 that prompts the worker to select the cutting chip length level, and a selection region r2 that allows selection of the cutting chip length level. In this example, the selection region r2 displays selection buttons 32a to 32c that correspond to three length levels, namely "Normal", "Short", and "Very Short". Each of the selection buttons 32a to 32c functions as a selection operation unit. Here, the relationship between the cutting chip lengths is expressed as an inequality: "Normal" > "Short" > "Very Short". In this example, for example, the length level corresponding to a chip breaking count of 0.5 per one rotation of the workpiece W is defined as "Normal", the length level corresponding to a chip breaking count of 1.5 is defined as "Short", and the length level corresponding to a chip breaking count of 2.5 is defined as "Very Short". The touch panel 33 detects an operation of each of the selection buttons 32a to 32c and transmits the corresponding operation signal to the control device 20.

Returning to FIG. 3, the control device 20 has an NC program storage unit 21, an NC program analysis unit 22, an oscillation condition calculation unit 23, a parameter storage unit 24, a drive signal generation unit 25, and a display control unit 26. The control device 20 is constituted by a computer having a CPU, ROM, and RAM. The NC program storage unit 21 and the parameter storage unit 24 are composed of non-volatile storage media such as ROM and a magnetic storage device, and the functions of the other functional units are implemented by a computer program. The control device 20 functions as a drive control unit and a display control device.

The NC program storage unit 21 stores an NC program configured to control operations of the tool feed drive unit 10 and the spindle drive unit 11 of the machine tool 1.

The NC program analysis unit 22, upon receiving an operation signal associated with the machining start button 31 provided on the operation panel 30, executes the NC program stored in the NC program storage unit 21. The NC program analysis unit 22, when executing the NC program, extracts operation commands related to the tool feed drive unit 10 and the spindle drive unit 11, and transmits the extracted operation commands to the drive signal generation unit 25.

The oscillation condition calculation unit 23 calculates an oscillation condition (oscillation frequency f (Hz) and oscillation amplitude A (mm) in this example) for making the length of cutting chips produced during the turning correspond to the selected length level, based on the length level selected through the cutting chip length selection unit 32 of the operation panel 30 and parameter data D (see FIG. 5) stored in the parameter storage unit 24.

Here, the parameter data D stored in the parameter storage unit 24 includes two parameters, as shown in FIG. 5: a chip breaking count parameter I, which represents the number of breakings of cutting chips per one rotation of the workpiece W; and an amplitude parameter K, which represents the ratio of the total amplitude to the feed amount of the cutting tool 3 per one rotation of the workpiece W. In the parameter data D, the chip breaking count parameter I and the amplitude parameter K are converted into table data in association with the cutting chip length levels "Normal", "Short", and "Very Short". In the example of FIG. 5, the chip breaking count parameters for "Normal", "Short", and "Very Short" are 0.5, 1.5, and 2.5, respectively, and the amplitude parameter K is fixed at 1.4.

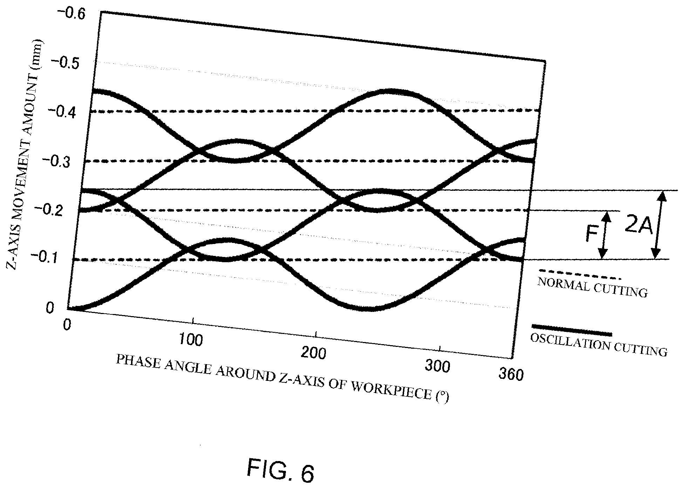

Next, the physical meanings of the chip breaking count parameter I and the amplitude parameter K will be described with reference to the graph in FIG. 6. This graph is a plot of the trajectory of the distal end of the cutting tool 3 (machining path), which is indicated by the two-dot chain line in FIG. 2. The horizontal axis represents the phase angle about the axis of the workpiece W, and the vertical axis represents the amount of movement of the cutting tool 3 in the Z-axis direction. In the example of this graph, the number of times the trajectory of the cutting tool 3 in the forward movement overlap with that in the backward movement (i.e., the number of times the cutting chips are broken) is 2.5 times per rotation of the workpiece W (i.e., five times per two rotations of the workpiece W). Therefore, a chip breaking count parameter I is 2.5. The larger the chip breaking count parameter I is, the more frequently the cutting chips are broken, and the shorter the length of the cutting chips becomes. On the other hand, the amplitude parameter K is the ratio of the total amplitude 2A (= single amplitude A × 2) of the oscillation machining component to the feed amount F (mm/one rotation) of the cutting tool 3 per one rotation of the workpiece W, and is defined as K = 2A / F. Theoretically, if K ≥ 1, the tool trajectory of the cutting tool 3 overlaps between the forward movement and the backward movement, making the breaking of cutting chips (chip breaking) possible. On the other hand, if K < 1, the tool trajectory of the cutting tool 3 does not overlap between the forward movement and the backward movement, so the cutting chip is not broken and remains connected. Note that, in the example of FIG. 6, K = 1.4. Since K > 1, the cutting chips are broken.

Based on the operation signal received from the touch panel 33 of the operation panel 30, the oscillation condition calculation unit 23 identifies the cutting chip length level selected through the cutting chip length selection unit 32. Then, the oscillation condition calculation unit 23 specifies the chip breaking count parameter I and the amplitude parameter K corresponding to the identified length level, from among the parameter data D (see FIG. 5) stored in the parameter storage unit 24.

The oscillation condition calculation unit 23 determines the oscillation frequency f [Hz] of the cutting tool 3 in the Z-axis direction, based on the specified chip breaking count parameter I and the rotation speed S (rpm) of the workpiece W extracted by the NC program analysis unit 22, using the following formula (1).

$$f = S \times I/60 \qquad ..Formula\ (1)$$

Further, the oscillation condition calculation unit 23 determines the oscillation amplitude A of the cutting tool 3 based on the specified amplitude parameter K and the feed amount F (mm/one rotation) of the cutting tool 3 per one rotation of the workpiece W, using the following formula (2).

$$A = F \times K/2 \qquad ...Formula\ (2)$$

Here, the feed amount F (mm/one rotation) is extracted from the NC program by the NC program analysis unit 22. The feed amount F (mm/one rotation) refers to a feed rate in normal cutting that does not include the oscillation component (see the broken line in FIG. 6).

Note that the derivation processes of formulas (1) and (2) can be easily understood based on the graph shown in FIG. 6 described above, and a detailed explanation is therefore omitted.

The drive signal generation unit 25, based on an operation command related to the spindle drive unit 11 extracted by the NC program analysis unit 22, generates a drive signal (control signal) for driving the spindle 2 at the rotation speed S (rpm) included in the operation command, and transmits the generated drive signal to the spindle drive unit 11.

Further, the drive signal generation unit 25 combines a feed operation command in the Z-axis direction without an oscillation component, extracted by the NC program analysis unit 22, with an oscillation operation command including the oscillation frequency f (Hz) and the oscillation amplitude A (mm) calculated by the oscillation condition calculation unit 23, and transmits a drive signal (control signal) corresponding to the combined operation command to the tool feed drive unit 10.

The display control unit 26 controls display content on the touch panel 33 provided on the operation panel 30. In this example, for the sake of convenience in explanation, it is assumed that the display control unit 26 displays the cutting chip length selection unit 32 on the touch panel 33 when the machine tool 1 is powered on.

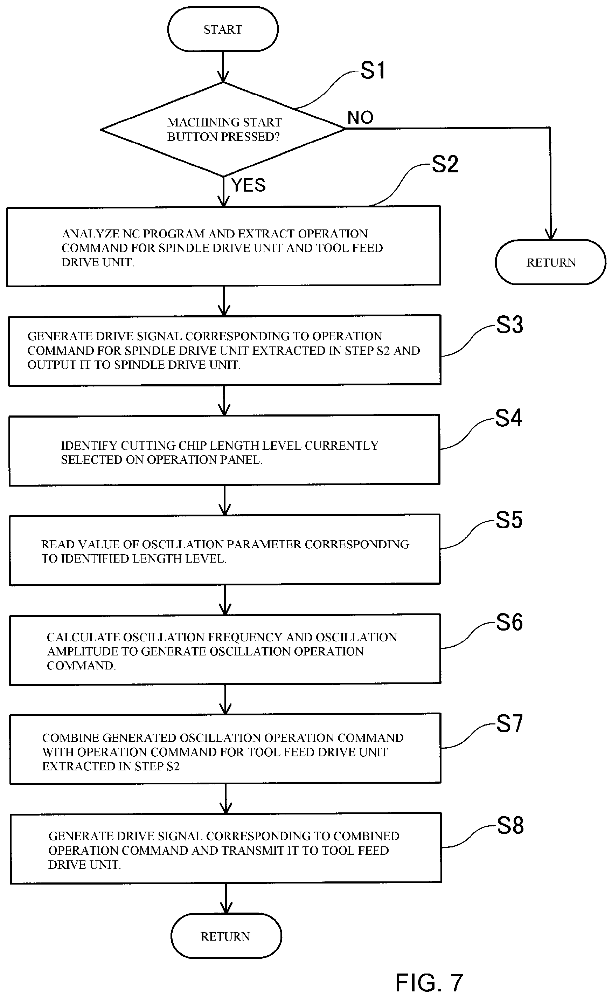

Next, a specific example of the oscillation machining control executed by the control device 20 will be described with reference to the flowchart of FIG. 7.

In step S1, the NC program analysis unit 22 determines whether the machining start button 31 has been pressed, based on the operation signal from the operation panel 30. If the result of the determination is NO, the process returns; if the result is YES, the process proceeds to step S2.

In step S2, the NC program analysis unit 22 extracts, based on the NC program stored in the NC program storage unit 21, an operation command related to the operation of the spindle drive unit 11 (e.g., the rotation speed S (rpm)) and an operation command related to the operation of the tool feed drive unit 10 (e.g., the movement position of the cutting tool 3 in the Z-axis direction and the feed amount F (mm/ one rotation), and the like), and transmits the extracted operation commands to the drive signal generation unit 25.

In step S3, the drive signal generation unit 25 generates a drive signal corresponding to the operation command for the spindle drive unit 11, which has been received from the NC program analysis unit 22 in step S2, and transmits the generated drive signal to the spindle drive unit 11. The spindle drive unit 11 operates according to this drive signal, and rotates the spindle 2 at the rotation speed S (rpm) instructed by the NC program.

In step S4, the oscillation condition calculation unit 23 identifies the cutting chip length level currently selected through the cutting chip length selection unit 32 of the operation panel 30.

In step S5, the oscillation condition calculation unit 23 reads the chip breaking count parameter I and the amplitude parameter K corresponding to the cutting chip length level identified in step S4, from among the parameter data D (see FIG. 5) stored in the parameter storage unit 24.

In step S6, the oscillation condition calculation unit 23, based on the chip breaking count parameter I and the amplitude parameter K read in step S5, calculates an oscillation frequency f (Hz) and an oscillation amplitude A (mm) to be targeted during the oscillation machining, and transmits the calculation results to the drive signal generation unit 25. Note that this calculation process of the oscillation frequency f (Hz) and the oscillation amplitude A (mm) is executed, using the above-described formulas (1) and (2).

In step S7, the drive signal generation unit 25 generates an oscillation operation command including the oscillation frequency f (Hz) and the oscillation amplitude A (mm) received from the oscillation condition calculation unit 23, and combines the generated oscillation operation command with the feed operation command for the tool feed drive unit 10, which was extracted by the NC program analysis unit 22 in step S2.

In step S8, a drive signal according to the operation command combined in step S7 is generated, and the generated drive signal is transmitted to the tool feed drive unit 10. Then, the process returns after the processing in step S8 is completed.

In the machine tool 1 configured as described above, when a worker selects the cutting chip length level through the cutting chip length selection unit 32 on the operation panel 30 and then presses the machining start button 31, the control device 20 specifies the chip breaking count parameter I and the amplitude parameter K corresponding to the selected cutting chip length level. Based on the specified chip breaking count parameter I and the amplitude parameter K, the oscillation frequency f (Hz) and the oscillation amplitude A (mm) in the Z-axis direction of the tool holding unit 4 by the tool feed drive unit 10 are determined, and a drive signal (control signal) for achieving the determined oscillation frequency f (Hz) and oscillation amplitude A (mm) is transmitted to the tool feed drive unit 10. In this way, the tool holding unit 4, under control by the control device 20, moves in the Z-axis direction with the feed amount F (mm/one rotation) instructed by the NC program while executing an oscillating movement in the Z-axis direction. As a result, the cutting tool 3 performs the turning on the workpiece W, and the length of the cutting chips is controlled to the length level selected through the cutting chip length selection unit 32.

Therefore, the worker can easily set the length of the cutting chips to be produced during machining of the workpiece, simply by selecting the cutting chip length level from among the preset three length levels through the cutting chip length selection unit 32, without a need of the worker him/herself setting the parameters related to oscillation such as the chip breaking count parameter I and the amplitude parameter K. Therefore, even a less-skilled worker who does not understand the meanings of the chip breaking count parameter I and the amplitude parameter K can easily set the length of cutting chips to be produced during the turning through a simple operation, and can also easily perform such oscillation machining.

(Embodiment 2)

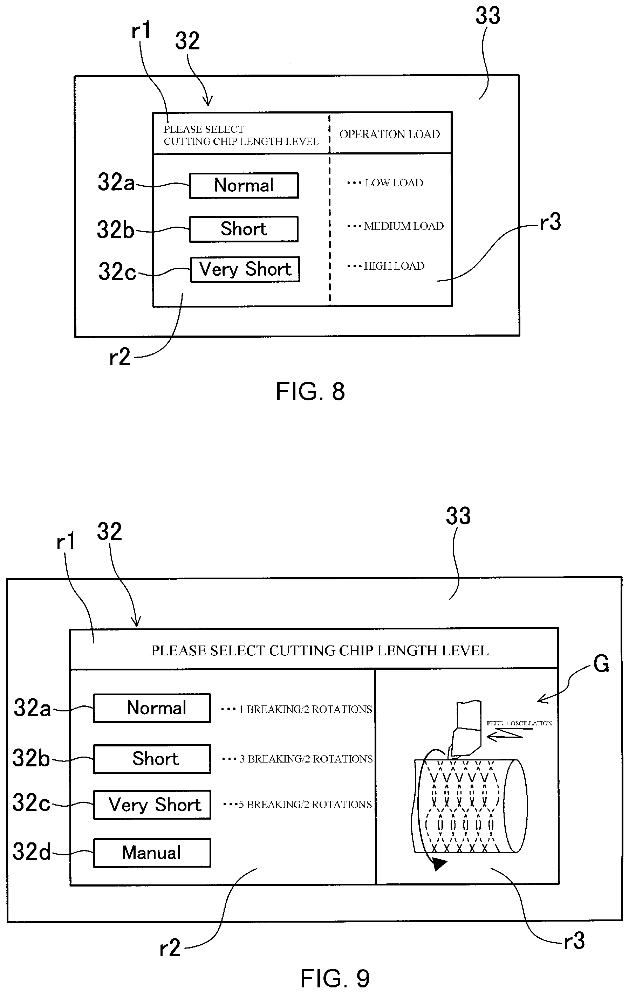

FIG. 8 shows Embodiment 2. This embodiment is different from Embodiment 1 in the display content of the cutting chip length selection unit 32. Note that, in the following description, the components identical to those in Embodiment 1 are given the same reference symbols, and detailed descriptions are omitted.

Namely, in the present embodiment, the cutting chip length selection unit 32 includes a load display region r3 in addition to the message display region r1 and the selection region r2.

The load display region r3 is arranged to the right of and adjacent to the selection region r2. The load display region r3 displays levels of magnitude of the drive load of the tool feed drive unit 10 required to achieve the cutting chip length levels labeled on the respective selection buttons 32a to 32c. That is, the load display region r3 displays levels of the operation load of the tool feed drive unit 10, in other words, levels of the magnitude of the drive load, when the oscillation machining control is executed based on the chip breaking count parameters I corresponding to the cutting chip length levels. In this example, the levels of magnitude are classified into three levels: "Low Load", "Medium Load", and "High Load". The "Low Load" is displayed beside the "Normal" selection button 32a. The "Medium Load" is displayed beside the "Short" selection button 32b. The "High Load" is displayed beside the "Very Short" selection button 32c.

Therefore, when selecting the cutting chip length level through the cutting chip length selection unit 32, the worker can easily recognize the magnitude of the drive load that will act on the tool feed drive unit 10 as a result of the selection. Thus, for example, when the machine tool 1 has been operating continuously for a long period and the worker wishes to reduce the drive load acting on the tool feed drive unit 10 as much as possible, the worker may take a compromised approach by selecting "Short" or "Normal", prioritizing the reduction of the drive load on the tool feed drive unit 10, even though the worker wishes to select the cutting chip length level of "Very Short". Alternatively, the worker may select the cutting chip length level of "Very Short" with recognition of the high load level. In either case, the operation becomes easier and more convenient for a less-skilled worker who does not understand the correlation between the cutting chip length level and the drive load acting on the tool feed drive unit 10, because the worker can appropriately select the cutting chip length level with prior recognition of the drive load acting on the tool feed drive unit 10, without engaging in complex thinking.

(Embodiment 3)

FIG. 9 shows Embodiment 3. This embodiment is different from Embodiment 1 in that the cutting chip length selection unit 32 includes a free setting button 32d that allows the cutting chip length to be set to any desired length.

Namely, as shown in FIG. 9, the cutting chip length selection unit 32 has, in addition to the selection buttons 32a to 32c for selecting the cutting chip length level, a free setting button 32d displayed as "Manual".

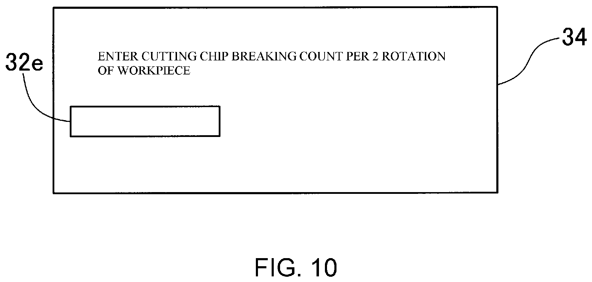

The display control unit 26, upon receiving an operation signal indicating that the free setting button 32d has been selected through the touch panel 33, displays a cutting chip length input screen 34 (see FIG. 10) below the cutting chip length selection unit 32 on the touch panel 33. This input screen 34 displays an input box 32e along with a message prompting the worker to input the chip breaking count per predetermined number of rotations (in FIG. 10, the chip breaking count per two rotations of the workpiece is shown as an example). The free setting button 32d and the input box 32e function as an input operation unit (input unit), and also as a reception unit that receives a selection instruction for the cutting chip length.

Here, a worker with limited understanding of oscillation machining control finds it difficult to determine what value should be entered into the input box 32e. Accordingly, in the present embodiment, a machining image diagram G (see FIG. 9) that allows the worker to visually understand the cutting chip breaking image is displayed on the right side of the selection region r2 in the cutting chip length selection unit 32. This allows the worker to roughly visualize the chip breaking count to be entered into the input box 32e and the cutting chip length corresponding to the chip breaking count. Further, in the present example, the chip breaking count per predetermined number of rotations of the workpiece W (in this example, the chip breaking count per two rotations of the workpiece W) is displayed on the right side of the selection buttons 32a to 32c displayed in the selection region r2. Therefore, the worker is able to determine the chip breaking count to be entered into the input box 32e with reference to these displays.

Note that, in the present example, when the free setting button 32d is pressed, each of the selection buttons 32a to 32c is disabled. On the other hand, when any of the three selection buttons 32a to 32c is selected after the free setting button 32d is pressed and the input screen 34 is displayed, the input screen 34 is closed, and the selection of the selection buttons 32a to 32c is enabled.

When the free setting button 32d is selected and the chip breaking count (an example of a parameter having a correlation with the cutting chip length) is entered into the input box 32e, the oscillation condition calculation unit 23 calculates the chip breaking count parameter I based on the entered chip breaking count. The amplitude parameter K when the free setting button 32d is selected is stored in advance as a fixed value in the parameter storage unit 24. This fixed value may be any value as long as it is 1 or greater, and for example, is 1.4 in this example. Based on this fixed value of the amplitude parameter K and the calculated chip breaking count parameter I, the oscillation condition calculation unit 23 calculates the oscillation frequency f (Hz) and the oscillation amplitude A (mm) in the oscillation machining control. The oscillation condition calculation unit 23 transmits, to the drive signal generation unit 25, an oscillation operation command including the calculated oscillation frequency f (Hz) and oscillation amplitude A (mm). The drive signal generation unit 25, as described in Embodiment 1, generates a drive signal corresponding to the received oscillation operation command, and transmits the generated drive signal to the tool feed drive unit 10.

As described, the control device 20 of the present embodiment is configured to, when the chip breaking count per predetermined number of rotations is entered through the input box 32e, determine the oscillation condition based on the entered chip breaking count and execute the oscillation machining control based on the determined oscillation condition.

Therefore, the worker is able to set the cutting chip length to be produced during the turning to any desired length other than the three length levels corresponding to the selection buttons 32a to 32c, by selecting the free setting button 32d and entering the desired chip breaking count through the input box 32e.

Therefore, according to the machine tool 1 of this embodiment, the worker is able to set the cutting chip length in more detail as needed, by pressing the free setting button 32d and inputting the chip breaking count through the input box 32e.

(Embodiment 4)

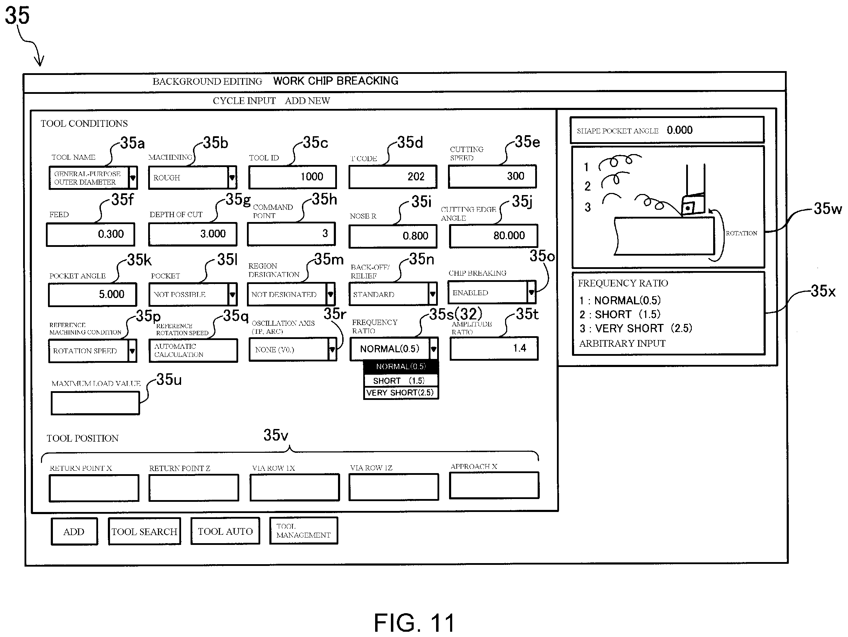

FIG. 11 shows Embodiment 4. This embodiment is different from the aforementioned embodiments in that an input box 35s for entering a frequency ratio also serves as the cutting chip length selection unit 32. The frequency ratio has the same meaning as the aforementioned chip breaking count parameter.

The frequency ratio input box 35s is provided in a later-described input screen 35 displayed on the touch panel 33.

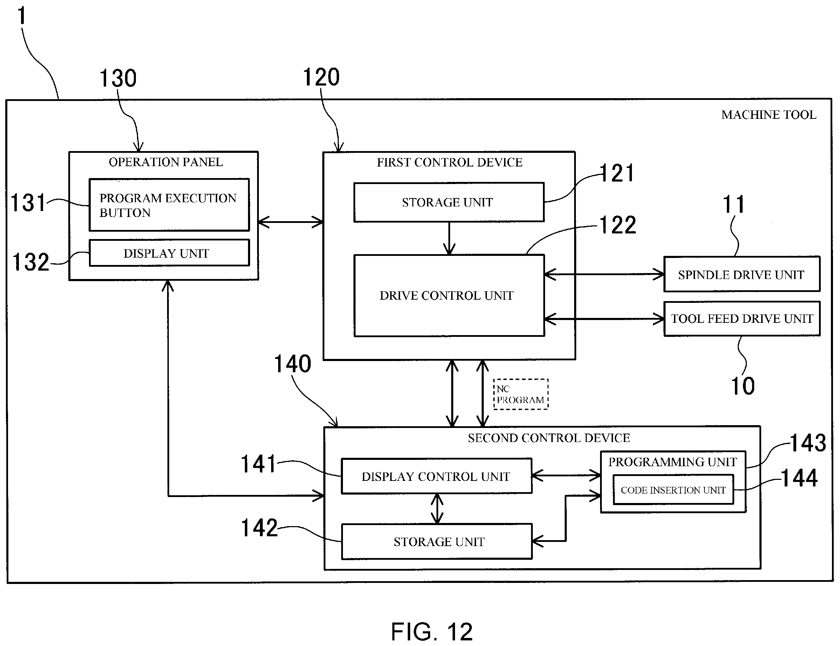

As shown in FIG. 12, the machine tool 1 has a first control device 120 configured to control movements of a tool 3a and a workpiece W. The first control device (numerical control device) 120 includes a drive control unit 122 that executes (interprets) an NC program and transmits drive signals (control signals) to the spindle drive unit 11 and the tool feed drive unit 10, and a storage unit 121 that stores a program and the like for causing the drive control unit 122 to function. In the machine tool 1, the spindle drive unit 11 and the tool feed drive unit 10 having received signals from the first control device 120 move the workpiece W and the tool 3a.

The drive control unit 122 of the first control device 120 executes (interprets) the NC program stored in the storage unit 121 to create an operation command from an operation code in the NC program, and drives the spindle drive unit 11 and the tool feed drive unit 10 based on the operation command.

The first control device 120 executes these drive control processes and storage processes, using arithmetic units such as a CPU or an LSI.

The machine tool 1 further includes a second control device 140 configured to control display on a display unit 132. The second control device 140 includes a display control unit 141 configured to control display on the screen of the display unit 132, a storage unit 142 that stores a display format and data to be displayed, and a programming unit 143 configured to create an NC program. Note that the display unit 132 corresponds to the above-described touch panel 32 and has the same configuration as the touch panel 32. The display unit 132 and the second control device 140 together constitute an NC program creation device.

The storage unit 142 of the second control device 140 further stores a program for supporting the creation of an NC program, and a program related to the display of the input screen 35 for such support. The display control unit 141 of the second control device 140 runs these programs and provides support for creating an NC program via the display screen. The programming unit 143 creates an NC program based on information such as conditions set through the screen for supporting the creation of the NC program. Further, the programming unit 143 has a function of directly creating an NC program by directly describing NC codes such as G codes and M codes, a function of editing the NC program, and a function of inserting a G code or an M code into a specific line or block of an existing NC program (code insertion unit 144). Note that the function of directly creating an NC program, the function of editing an NC program, and the function of inserting a G code or an M code into a specific line or block of an existing NC program are collectively referred to as NC program creation function, and the programming unit 143 serves as a creation unit configured to create an NC program.

The second control device 140 executes the storage process, the display control process, and the programming process using an arithmetic unit such as a CPU or an LSI, which is different from the arithmetic unit of the first control device 120.

Further, the operation panel 130 has a program execution button 131 and the above-described display unit 132, and the display unit 132 displays a screen for an NC program or a keyboard and the like. The worker can perform operations on the operation panel 130, such as making various settings related to machining and creating an NC program, while checking the display on the display unit 132.

The drive control unit 122 executes a designated NC program when the program execution button 131 on the operation panel 130 of the machine tool 1 is pressed. That is, the drive control unit 122 reads a designated NC program stored in the storage unit 121, controls the spindle drive unit 11 and the tool feed drive unit 10 based on the read NC program, and thereby executes machining.

(NC program)

An overview of creating an NC program including codes related to oscillation will be described. The machining path of the turning, when an NC program for oscillation machining is executed in the machine tool 1, is the same as the graph shown in FIG. 6. As described above, the horizontal axis of the graph represents the phase angle about the Z-axis of the workpiece W, and the vertical axis represents the amount of movement of the cutting tool 3 in the Z-axis direction.

The drive control unit 122 of the present embodiment performs the turning by controlling relative movement between the workpiece W and the tool 3a based on the NC program, as shown in the graph.

The drive control unit 122, based on the NC program, feed-drives the tool holding unit 4 while causing the tool holding unit 4 to oscillate in the Z-axis direction (the direction along the axis of the spindle 2) relative to the workpiece W. As a result, the machining point trajectory of the tool 3a held by the tool holding unit 4 draws an oscillation waveform having a substantially sinusoidal shape (see FIG. 6). In this case, the NC program uses G codes and M codes to instruct feed in the Z-axis direction, and also instructs the oscillation to be the oscillation shown in FIG. 6. In other words, the drive control unit 122 accurately executes the command codes of the NC program, and does not set a new machining path or a new command code by itself within the drive control unit 122.

In this way, if an NC program including codes related to oscillation can be created, there is no need to separately provide a conventional high pressure coolant device for breaking cutting chips.

Taking the above into account, a method for easily creating a program including codes related to oscillation, even with limited experience in creating programs executed in the machine tool 1, will be described.

The present embodiment introduces two concepts, an amplitude ratio K and a frequency ratio I, to make the creation of an NC program easier. The amplitude ratio K has the same meaning as the aforementioned amplitude parameter, and the frequency ratio I has the same meaning as the aforementioned chip breaking count parameter.

FIG. 11 is a diagram of a creation support screen for creating an NC program including these two conditions. In the present embodiment, the creation support screen for creating an NC program displays a tool condition setting screen including the frequency ratio I and the amplitude ratio K; however, this is not limiting. The creation support screen includes input fields and selection fields for tool conditions such as the tool, tool number (T code), cutting speed, feed, depth of cut, command point, chip breaking, oscillation axis, and the like. In the present embodiment, the screen includes a selection field for the frequency ratio and an input field for the amplitude ratio.

In the screen shown in FIG. 11, three options-"Normal (0.5)", "Short (1.5)", and "Very Short (2.5)"-are set in a pull-down menu for the frequency ratio. Further, the screen shown in FIG. 11 includes an input field for the oscillation ratio, in which the value 1.4 is entered.

To create an NC program, the selection field for chip breaking is enabled, the frequency ratio is selected, the amplitude ratio is entered, and other conditions in the creation support screen are also entered. Then, by pressing the NC program button 35z displayed at the bottom right, these pieces of information are sent to the programming unit 143. The programming unit 143, in addition to the information entered in the creation support screen, obtains information required for machining, such as the shape of the workpiece, and creates an NC program by performing calculations based on the information. The NC program created is transmitted to, and stored in, the storage unit 142 of the second control device 140.

When an operator of the machine tool 1 selects the created program on the operation panel 130 and presses the program execution button 131 provided on the operation panel 130, the second control device 140 having received the input from the operation panel 130 transmits the NC program stored in the storage unit 142 to the first control device 120. The first control device 120 receives the NC program, analyzes its content, and issues commands for driving the spindle drive unit 11 and the tool feed drive unit 10 based on the NC program. Through the above, the movements of the tool 3a and the workpiece W attached to the machine tool 1 are controlled, and the turning is performed. Thus, with the machine tool 1 of this example, even a worker without accurate knowledge of oscillation cutting or NC codes related to oscillation cutting can easily perform effective oscillation cutting.

(Variation 1)

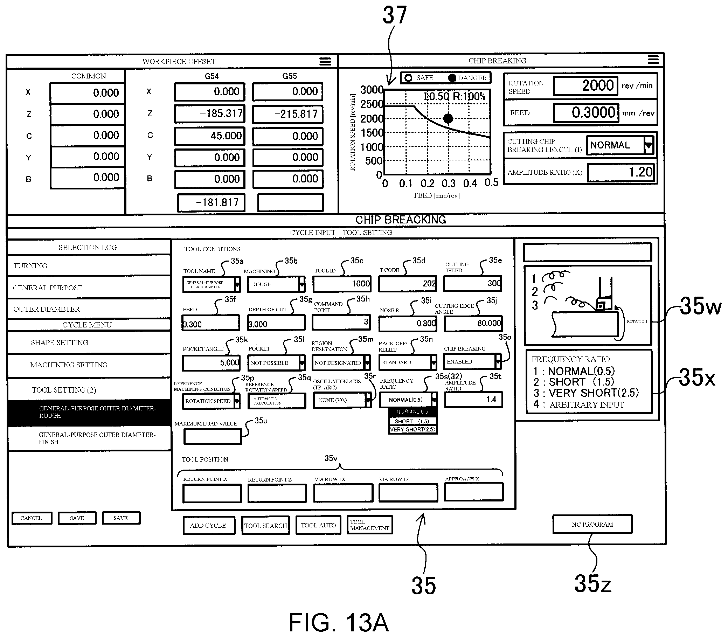

Variation 1 is an example in which support for program creation is provided through interactive programming. Since the creator of the program can create a program through interactive dialogue, the creator can create the program without knowing the details of G codes or the like. First, when an interactive programming application is launched as the program creation application (software), an input screen 35 (see FIG. 13A) is displayed. Since the programming is in an interactive format, items such as shape setting, machining setting, measurement setting, and tool setting are provided, and the user selects the necessary items for the program to be created and sets the corresponding conditions. Then, finally, an NC program is created by the programming unit based on the set conditions. For example, when the shape setting is selected, a profile input screen for the component to be machined is displayed, and the shape information of the component is input and set by drawing the profile of the component (finished product). Needless to say, the shape setting may be in a form that does not involve drawing the profile of the component, but instead involves setting the shape information of the component by importing a CAD diagram of the component (finished product). As a result, the shape information necessary for creating the NC program can be set on the shape setting screen. Similarly, the necessary settings are made according to the NC program to be created. For example, if an NC program for machining is to be created, the machining setting and the tool setting are performed in addition to the shape setting. Finally, by pressing the NC program button 35z, the programming unit creates and outputs an NC program based on the conditions (information) set by the shape setting, the machining setting, and the tool setting.

In Variation 1, a condition for creating a code related to oscillation is set in the tool setting input screen 35.

As shown in FIG. 11, the tool setting input screen 35 is a screen for setting information related to the tool 3 (tool conditions, tool position, and the like). The input screen 35 of FIG. 11 includes input boxes 35a to 35u for inputting a tool name, a machining type, a tool ID, a T code, a cutting speed, a feed rate, a depth of cut, a command point, a nose R, a cutting edge angle, a pocket angle, a pocket, a region designation, a relief surface wear, a chip breaking, a reference machining condition, a reference rotation speed, an oscillation axis, a frequency ratio, an amplitude ratio, and a maximum load value. Further, the input screen 35 includes an input box 35v related to the tool position. Note that, in the example shown in FIG. 11, "General-Purpose Outer Diameter" is selected from the pull-down as the tool name.

The input box 35r for "Oscillation Axis" shown in the tool condition is a pull-down box for selecting either not to oscillate the cutting tool 3 or, if the cutting tool 3 is to be oscillated, a direction in which the cutting tool 3 is oscillated. In FIG. 11, "None (V0)" is displayed, which does not cause the cutting tool 3 to vibrate. For example, the oscillation axis is displayed as "X-Axis (X0)" in the case of oscillation in the X-axis, "Z-Axis (Z0)" in the case of oscillation in the Z-axis, and "X-Axis Z-Axis (XZ)" in the case of simultaneous oscillation in the two axes of the X-axis and the Z-axis. For example, in the case of simultaneous oscillation in both the Y-axis and the Z-axis, "Y-Axis Z-Axis (YZ)" can be displayed. When the " ▼ " mark at the right end of the input box 35r is touched, tabs such as "X-Axis (X0)" are displayed as a pull-down menu, and a program creator selects a tab corresponding to the direction in which oscillation is to be performed.

Further, the input box 35o for "Chip Breaking" shown in the tool condition is a pull-down for selecting whether to enable or disable the chip breaking function. That is, when the " ▼ " mark at the right end of the input box 35o is touched, the "Enabled" tab and the "Disabled" tab are displayed as a pull-down menu, allowing the worker to select either of the two tabs.

In the upper right corner of the input screen 35, a first guidance region 35w is provided to explain the input content of the selected input box. The first guidance region 35w displays an image (still image, moving image, and the like) that allows the program creator to visually and intuitively understand the conditions that can be set. In the example of FIG. 11, an image is displayed that allows the program creator can visually and intuitively understand the length of the cutting chips changes according to the selected input of the frequency ratio. A second guidance region 35x, which is displayed below the first guidance region 35w, is a guidance region that explains the correspondence between the numerical value of the frequency ratio I and the cutting chip length level when performing chip breaking (cutting chip segmentation) to shorten long cutting chips. In the second guidance region 35x of the present embodiment, the length of the cutting chips is denoted as "NORMAL (0.5)", "SHORT (1.5)", "VERY SHORT (2.5)", and guidance is provided so that the length of the cutting chips can be intuitively understood. Further, it is also explained that an arbitrary input can be made directly by a program creator who has extensive experience in creating programs. The numerical value in parentheses in the guidance region represents the numerical value of the frequency ratio I corresponding to each cutting chip length level, and is also the numerical value written into the NC program of the present embodiment when the NC program is created. As described above, the second guidance region 35x may serve as an explanation region that explains the illustration displayed in the first guidance region 35w, or as an explanation region that supplements the same illustration displayed in the first guidance region 35w.

The program creator recognizes the relationship between the frequency ratio I and the cutting chip length level by referring to the first guidance region 35w and the second guidance region 35x, and performs an input operation to the input box 35s. That is, for example, if the programmer wishes to set the length of the cutting chips to "NORMAL", the program creator selects "NORMAL (0.5)" from the pull-down menu provided in the frequency ratio input box 35s. In this example, when the program creator selects (touches) the " ▼ " mark provided at the right end of the frequency ratio input box 35d, three options - "NORMAL (0.5)", "SHORT (1.5)", and "VERY SHORT (2.5)" - are displayed in a pull-down menu, allowing the program creator to select one of them. If an arbitrary input is desired, the cursor is moved to the input box and the input box is selected (touching the screen is also acceptable), allowing a numerical value to be entered using the keyboard.

After the setting is completed in the input screen 35, the NC program can be created by the programming unit by pressing the NC program button 35z. Since the NC program itself is executable in various machine tools, a screen that allows the operator of the machine tool 1 to visually and easily confirm whether the NC program is usable on the machine tool 1 to be used may be displayed on the machine tool 1 on which the NC program is to be executed. According to the above-described input method, even a worker without precise knowledge of oscillation cutting or NC codes related to oscillation cutting can easily perform the setup for oscillation cutting, including the setting of the cutting chip length, and can also easily create an NC program required to execute the oscillation cutting.

In the present embodiment, a confirmation screen is displayed before an NC program is created by the programming unit, so that the program creator or the operator of the machine tool 1 can confirm that the NC program to be created can be used on the machine tool 1 on which the NC program is planned to be executed. For example, when necessary setting is performed in the input screen 35 and a cycle confirmation button is pressed, a confirmation graph screen 37 showing whether the NC program can be safely used on the machine tool 1 is displayed on the display unit 132, based on the feed rate entered in the input box 35f, the oscillation condition entered in the input boxes 35r to 35t, and an automatically calculated rotation speed of the spindle 2, and the like.

FIG. 13A shows an example of the confirmation graph screen 37 displayed on the display unit 132. In the confirmation graph screen 37, the vertical axis represents the rotation speed, and the horizontal axis represents the feed rate. A line is displayed in the graph to divide a safety region (stable region) from a non-recommended region (unstable region). The safety region is a machining region in which machining can be performed without imposing unnecessary load on the machine tool 1 or the tool, for example, a machining region where regenerative chatter does not occur. The non-recommended region is a machining region in which machining may impose unnecessary load on the machine tool 1 or the tool, for example, a machining region where regenerative chatter is likely to occur. When the tool 3a is subjected to a load, the service life of the tool 3a is shortened and more frequent tool changes are required. Therefore, it is desirable to perform machining without applying unnecessary load.

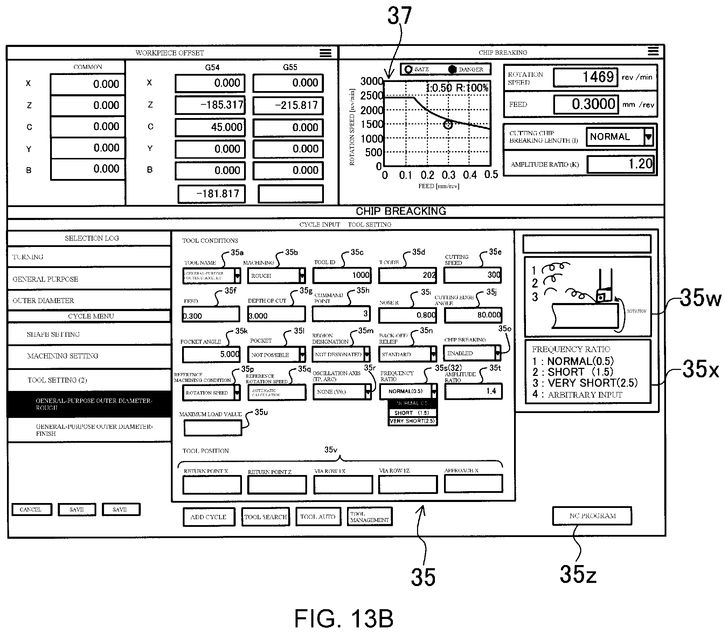

The display control unit 141 plots and displays the values calculated based on the conditions set in the input screen in this graph. When a plotted point is positioned in the non-recommended region above the division line, the display control unit 141 displays the plotted point as a black circle (see FIG. 13A). On the other hand, when a plotted point is positioned in the safety region below the division line, the display control unit 141 displays the plotted point as a white circle (see FIG. 13B). As shown in FIG. 13A and FIG. 13B, on the right side of the confirmation graph screen 37, the rotation speed of the spindle 2, the feed rate of the tool 3a, the cutting chip breaking length, and the amplitude ratio K, which serve as the basis for calculating this operation point, are displayed. As described above, the rotation speed of the spindle 2 is entered through the input box 35q, the feed rate of the tool 3a is entered through the input box 35f, the cutting chip breaking length is selected through the input box 35s, and the amplitude ratio K is entered through the input box 35t. The program creator checks the display, and if it is confirmed that the machine tool 1 to be used can be safely operated, presses the NC program button 35z to create the NC program using the programming unit. If the program is found to be unsafe, as in the case shown in FIG. 13A, the input values and selections are revised to bring the program into a safe operating state. Further, if the NC program has already been created, the operator of the machine tool 1 confirms that the NC program can be safely executed on the machine tool 1 to be used, and then presses the program execution button 131. When the program execution button 131 is pressed, the first control device 120 of the machine tool 1 analyzes the NC program and performs machining based on the NC program on the machine tool 1 by sending commands to the spindle drive unit 11 and the tool feed drive unit 10.

To perform machining with the machine tool 1, an NC program needs to be created. To this end, the programming unit 143 creates an NC program based on the specification values entered through the input screen 35. At this time, when the chip breaking function is enabled, the programming unit 143 creates a code related to oscillation based on at least the setting values of the oscillation axis, the frequency ratio I, and the amplitude ratio K, and creates an NC program including this code. The programming unit 143 transmits the created NC program to the first control device 120. The first control device 120 then analyzes the received NC program, transmits drive signals to the spindle drive unit 11 and the tool feed drive unit 10, and causes the machine tool 1 to execute machining of the workpiece W.

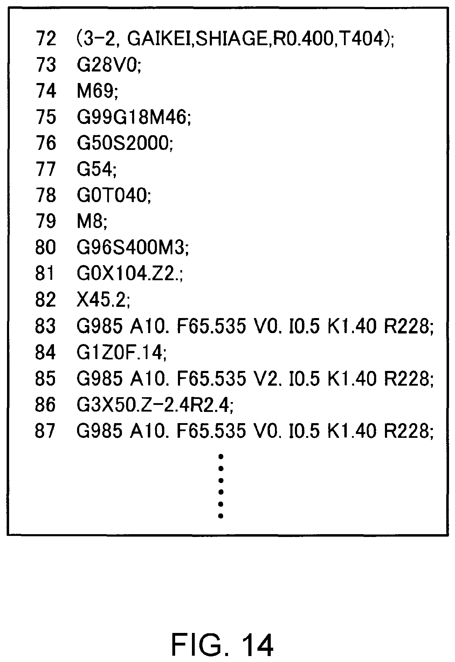

FIG. 14 shows an example of an NC program created by the programming unit 143. In this example, it can be seen that operation commands (G codes) for executing oscillation machining control are incorporated in rows 83, 85, and 87.

Note that, in the example of the NC program shown in FIG. 14, the block numbers and line numbers, which correspond to the sequence numbers, are the same, and therefore the explanation is given by line.

As another program example, the chip breaking code "Chip Breaking ON (LXX, LZZ, Frequency, Amplitude, ID)" may be used instead of the G code.

In the above, LXX represents the X-axis, LZZ represents the Z-axis, Frequency indicates the frequency of a $\sin^2$ function as an oscillation function per spindle rotation, Amplitude indicates the amplitude of the $\sin^2$ function, and ID represents the number of the static synchronization action required to start the technology cycle and to be called periodically.

If the chip breaking function is enabled in the input screen 35, the programming unit inserts a Chip Breaking code into the NC program. If both the X-axis and the Z-axis are selected as the oscillation axes, the programming unit sets LXX and LZZ, and also converts the value set as the frequency ratio into the corresponding frequency and replaces "Frequency" with the numerical value, and converts the value set as the amplitude ratio into the corresponding amplitude and replaces "Amplitude" with the numerical value.

Thus, with the machine tool 1 of this example, even a worker without accurate knowledge of oscillation cutting or NC codes related to oscillation cutting can easily create an NC program for performing oscillation cutting, and can also easily perform effective oscillation cutting.

(Variation 2)

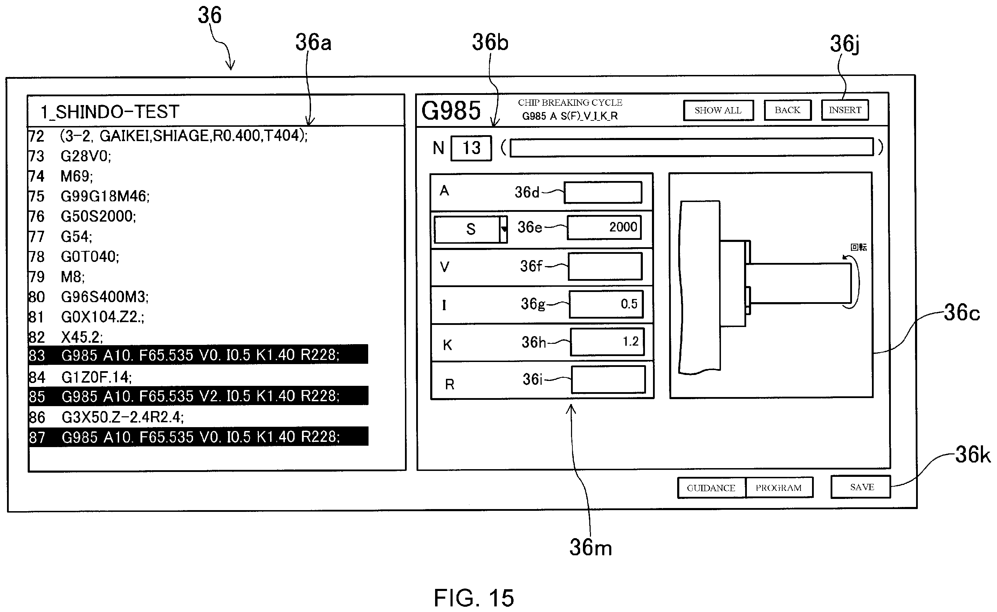

The second control device 140 of Variation 2 includes a programming unit including a code insertion unit capable of executing a process of inserting a function code for chip breaking into an NC program, in response to an input via a guidance screen 36 (see FIG. 15) displayed on the display unit 132. In other words, the second control device 140 includes the programming unit 143 (an example of a programming unit) including a code insertion unit 144 (an example of a code insertion unit), in addition to the display control unit 141 and the storage unit 142.

When a program editing function is launched on the operation panel 130, the display control unit 141 displays a program editing screen on the display unit 132. While a program editor can directly edit the program by selecting a portion to be edited from the program displayed, the present variation first displays a selection screen that allows the editor to select a function to be edited, with icons of technology cycles (functions set to achieve predetermined machining and the like) being displayed. The selection screen displays icons of technology cycles such as chip breaking, multithreading 2.0, keyway broaching, application tuning cycle, and gear hobbing, allowing the editor to select a function to be edited. When a function is selected, the display control unit 141 displays the guidance screen 36 for the function selected in the editing screen on the display unit 132. FIG. 15 shows a state in which the chip breaking technology cycle is selected and the guidance screen 36 for chip breaking is displayed.

In the guidance screen 36 of FIG. 15, a window for the program display region 36a is arranged on the left side of the screen, and a window for the guidance region 36b is arranged on the right side of the screen.

The program display region 36a displays an NC program entered through a keyboard or an NC program stored in the storage unit 121. In the program display region 36a of FIG. 15, an NC program for turning, which is called from the storage unit 121, is displayed.

The guidance region 36b includes an image (still image, moving image, and the like) that describes the function selected in the technology cycle, and an image area 36c displaying a written description of the selected function and guidance regarding input.

The guidance region 36b also includes a guidance input region 36m. The guidance input region 36m in FIG. 15 includes six input boxes 36d to 36i.

The image region 36c of FIG. 15 displays an image that allows a worker to visually understand the positional relationship between the workpiece W and the tool 3a, the direction of rotation of the workpiece W, and the movement and vibration of the tool 3a. The image region 36c makes it easier for a worker to visually understand the chip breaking function, and the description and guidance displayed around the area facilitate the input and setting of numerical values in the guidance input region 36m.

The guidance input region 36m of FIG. 15 includes six input boxes 36d to 36i, which are arranged in order from top to bottom. On the left side of each of the input boxes 36d to 36i, alphabetic characters ("A", "S", "V", "I", "K", and "R" in this example), each corresponding to the specification value to be entered, are displayed. "S" represents the rotational speed of the spindle 2, "I" represents the above-described frequency ratio, and "K" represents the above-described amplitude ratio.

In the example of FIG. 15, 2000 (rpm) is entered into the input box 36e for specifying the rotational speed of the spindle 2, 0.5 is entered into the input box 36g for specifying (selecting) the frequency ratio I used to determine the cutting chip length, and 1.2 is entered into the input box 36h for specifying (selecting) the amplitude ratio K.

Based on the frequency ratio I and the amplitude ratio K input through the guidance screen 36, a code related to oscillation is created and inserted into a line selected by an operator of the machine tool 1 in the program display region 36a. The selection of a row by the operator may be performed not only by a touch operation but also by operating a cursor key. The code insertion unit 144 specifies the position of the line (or block number) into which the code is to be inserted, based on the signal of the touch operation or the cursor key operation. Then, after identifying the position of the insertion row, the code insertion unit 144, upon receiving an operation signal from the insertion button 36j provided in the upper right of the guidance screen 36, inserts the code associated with the oscillation into the specified row in the NC program.

In FIG. 15, the code related to oscillation is inserted in line 83, line 85, and line 87 of the NC program displayed in the program display region 36a. The insertion line is entirely displayed with a black background, and the characters of the operation command code are displayed in white.

When the code insertion unit 144 receives an operation signal from the save button 36k provided in the lower right of the guidance screen 36, the code insertion unit 144 stores the NC program, in which the operation command code has been inserted, in the storage unit 142 of the second control device 140, and also transmits the NC program to the first control device 120 to store the same in the storage unit 121.

When the drive control unit 122 receives an execution command of the NC program (a command indicating that the program execution button 131 has been pressed) from the operation panel 130, the drive control unit 122 controls the operation of the spindle drive unit 11 and the tool feed drive unit 10 according to the NC program stored in the storage unit 121, for example, the NC program created or edited in the programming unit 143, or having the operation command code inserted. As a result, the cutting machining by the tool 3a is executed multiple times while the tool 3a oscillates in the X-axis direction based on the oscillation condition input by the operator.

The present variation allows a user to insert a desired code into any row (or block) of the NC program while viewing the NC program displayed in the program display region 36a of the guidance screen 36. Therefore, it is possible to reduce the programming burden on the operator of the machine tool 1.

(Other Embodiments)

In each of the above embodiments, the rotation mechanism part of the machine tool 1 is constituted by the spindle drive unit 11, and only the workpiece W is rotated by the spindle drive unit 11. However, the present invention is not limited to this. For example, the workpiece W may be fixed so as not to rotate, and only the cutting tool 3 may be rotated around the Z-axis, or both the workpiece W and the cutting tool 3 may be rotated around the Z-axis. In other words, the rotation mechanism part of the machine tool 1 may have any configuration as long as the cutting tool 3 and the workpiece W are rotated relative to each other along the circumferential direction of the workpiece W.

In each of the above embodiments, only the cutting tool 3 is driven in the Z-axis direction by the tool feed drive unit 10. However, the present invention is not limited to this. For example, the cutting tool 3 may be fixed so as not to move in the Z-axis direction, and only the workpiece W may be driven in the Z-axis direction, or both the cutting tool 3 and the workpiece W may be driven in the Z-axis direction. In other words, the feed drive unit of the machine tool 1 may have any configuration, as long as the cutting tool 3 and the workpiece W are feed-moved relative to each other along the Z-axis direction (along the rotation axis).

Each of the above embodiments shows an example in which the workpiece W is machined into a cylindrical shape by the cutting tool 3. However, the present invention is not limited to this. For example, the workpiece W may be machined into a tapered shape in which the machining diameter varies in the Z-axis direction.

In the above embodiments, the cutting tool 3 is configured to perform turning on the outer peripheral surface of the workpiece W. However, the present invention is not limited to this. For example, the cutting tool 3 may be configured to perform turning on the inner peripheral surface of a hollow workpiece W.

In each of the above embodiments, each of the selection buttons 32a to 32c of the cutting chip length selection unit 32 is configured as a soft key displayed on the touch panel 33. However, the present invention is not limited to this. For example, each of the selection buttons 32a to 32c may be configured as a hard key physically fixed to the operation panel 130.

In each of the above embodiments, the cutting chip length selection unit 32 is configured to visually display selectable cutting chip length levels on the touch panel 33. However, the present invention is not limited to this. For example, the cutting chip length selection unit 32 may be configured to present selectable length levels by means of audio output.

In each of the above embodiments, the length levels "Normal", "Short", and "Very Short" are defined as lengths in which the chip breaking count per one rotation is 0.5, 1.5, and 2.5, respectively. However, the present invention is not limited to this. That is, the chip breaking count corresponding to each length level can be set to any desired value, and is not limited to the above example. Further, each length level may be defined, for example, as a ratio with respect to the circumferential length of the workpiece W, without using the concept of chip breaking count.

In each of the embodiments, the cutting chip length selection unit 32 is configured to allow selection of three length levels: "Normal, " "Short, " and "Very Short", as a plurality of selectable length levels. However, the present invention is not limited to this. The number of selectable length levels may be two, or four or more.

In each of the above embodiments, the parameter storage unit 124 is configured as part of the control device 120, but the present invention is not limited to this, and the parameter storage unit 120 may be configured as a unit separate from the control device 120.

In Embodiment 3 described above, a chip breaking count per predetermined rotation can be entered in the input box 32e. However, the present invention is not limited to this. For example, a configuration may be employed in which a cutting chip length ratio with respect to the circumferential length of the workpiece W can be entered. Further, the input box 32e may be configured so that the length of the cutting chip is directly entered therein.

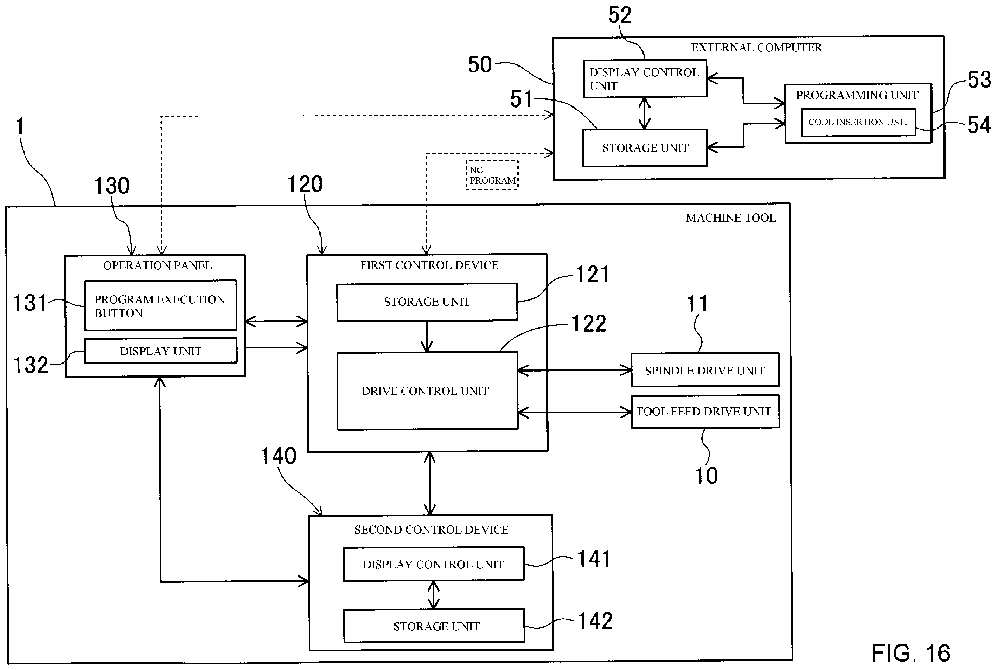

In Embodiment 4, the programming unit 143 is provided in the second control device 140. However, the present invention is not limited to this. For example, as shown in FIG. 16, a programming unit 53 (a functional unit similar to the programming unit 143) may be provided in an external computer 50. In such a case, a display control unit 52 of the external computer 50 displays the input screen 35 in the display unit 132 of the operation panel 130. The programming unit 53 of the external computer 50 creates an NC program based on the oscillation condition entered through the input screen 35. Then, the programming unit 53 transmits the created NC program to the first control device 120 to be stored in the storage unit 121.

Similarly, in each of the variations, the code insertion unit 144 is provided in the second control device 140. However, the present invention is not limited to this. For example, as shown in FIG. 16, a code insertion unit 54 (a functional unit similar to the code insertion unit 144) may be provided in an external computer 50.

In each of the above embodiments, the control device 120 of the machine tool 1 also serves as a display control device. However, the present invention is not limited to this. The display control device may be configured as a unit separate from the control device 120 of the machine tool 1. In this case, the display control device may be configured, for example, as an external computer provided outside the machine tool 1.

The present invention encompasses any combination of the aforementioned embodiments and variations.

Note that the above description of embodiments is in all respects illustrative and not restrictive. Modifications and variations can be made as appropriate by a person skilled in the art. The scope of the present disclosure is indicated by the claims, not by the embodiments described above. Further, the scope of the present invention includes modifications of the embodiments that fall within the scope of the patent claims and the equivalents.

[LISTING OF REFERENCE CHARACTERS]

| | |
|---|---|
| I. | Frequency Ratio (Chip Breaking Count Parameter) |
| W. | Workpiece |
| f. | Oscillation Frequency |
| 1. | Machine Tool |
| 3. | Cutting Tool |
| 10. | Tool Feed Drive Unit (Feed Drive Unit) |
| 11. | Spindle Drive Unit (Rotation Drive Unit) |
| 20 | Control Device (Drive Control Unit, Display Control Device) |
| 24. | Parameter Storage Unit (Storage Unit) |
| 26. | Display Control Unit |
| 32a. | Selection Button (Selection Operation Unit) |
| 32b. | Selection Button (Selection Operation Unit) |
| 32c. | Selection Button (Selection Operation Unit) |
| 32d. | Free Setting Button (Input Operation Unit) |
| 32e. | Input Box (Input Operation Unit) |

**Claims**

1. An NC program creation device configured to create an NC program to be executed by a machine tool in which cutting chips are produced during cutting of a workpiece, comprising:

   a reception unit configured to receive a selection instruction in which a cutting chip length is selected; and
   a creation unit configured to create an NC program including a G code or an M code for performing cutting so that cutting chips of the selected cutting chip length are produced, based on the selection instruction.

2. An NC program creation device configured to create an NC program to be used in a machine tool, the machine tool including:

a tool holding unit configured to hold a tool;
a workpiece holding unit configured to hold a workpiece;
a rotation drive unit configured to rotate the workpiece holding unit about an axis;
a feed drive unit configured to move the workpiece holding unit and the tool holding unit relative to each other in a direction along the axis and in a direction orthogonal to the axis; and
a numerical control unit configured to control the rotation drive unit and the feed drive unit according to an NC program,
the device comprising:

a display unit configured to display a screen;
a display control unit configured to control display of the screen on the display unit;
a data input unit configured to receive data entered via the screen displayed on the display unit;
a program creation unit configured to create an NC program based on data entered through the data input unit,
wherein the program creation unit is configured to create an NC program including an NC code for executing an oscillation cutting operation in which the tool is oscillated forward and backward at a predetermined frequency in a direction parallel to the axis, during cutting movement of the tool relative to the workpiece in the direction parallel to the axis,
wherein the display control unit is configured to display, on the display unit, a selection screen through which one operation mode is selected from among a plurality of preset operation modes related to the oscillation cutting operation,
wherein the data input unit is configured such that selection information related to the operation mode selected through the selection screen displayed on the display unit is entered, and
wherein the program creation unit is configured to create an NC program including an NC code for executing the oscillation cutting operation corresponding to the selection information entered through the data input unit.

3. The NC program creation device according to claim 2, wherein the selection screen displayed on the display unit by the display control unit is a selection screen through which one operation mode is selected from among a plurality of operation modes set according to an oscillation frequency.

4. The NC program creation device according to claim 2, wherein the program creation unit is configured to create, as an NC program for executing the oscillation cutting operation, an NC program including an NC code defining execution of oscillation, an NC code defining an oscillation frequency, and an NC code defining an oscillation amplitude.

5. The NC program creation device of claim 2, wherein the program creation unit is configured to create a new NC program by inserting a created NC program for the oscillation cutting operation into an NC program created in advance.

6. The NC program creation device of claim 5, wherein the program creation unit is configured to transmit the NC program created to the numerical control unit of the machine tool.

7. A machine tool, comprising:

a tool holding unit configured to hold a tool that machines a workpiece;
a workpiece holding unit configured to hold the workpiece;
a rotation drive unit configured to rotate the workpiece holding unit about an axis;
a feed drive unit configured to move the workpiece holding unit and the tool holding unit relative to each other in a direction along the axis and in a direction orthogonal to the axis;
a numerical control unit configured to control the rotation drive unit and the feed drive unit according to an NC program; and
an NC program creation device of any one of claims 1 to 6.

X-AXIS

Z-AXIS

1

5

2

6

4

3

W

FIG. 1

FEED + OSCILLATION

3

W

FIG. 2

FIG. 3

r1

32

33

PLEASE SELECT
CUTTING CHIP LENGTH LEVEL

| Normal | 32a |
| Short | 32b |

r2

| Very Short | 32c |

## FIG. 4

D

| CUTTING CHIP LENGTH LEVEL | CHIP BREAKING COUNT PARAMETER I | AMPLITUDE PARAMETER K |
|---|---|---|
| Normal | 0.5 | 1.4 |
| Short | 1.5 | 1.4 |
| Very Short | 2.5 | 1.4 |

## FIG. 5

FIG. 6

START

S1

MACHINING START
BUTTON PRESSED?

NO

YES

S2

ANALYZE NC PROGRAM AND EXTRACT OPERATION
COMMAND FOR SPINDLE DRIVE UNIT AND TOOL FEED
DRIVE UNIT.

RETURN

GENERATE DRIVE SIGNAL CORRESPONDING TO OPERATION
COMMAND FOR SPINDLE DRIVE UNIT EXTRACTED IN STEP S2 AND
OUTPUT IT TO SPINDLE DRIVE UNIT.

S3

IDENTIFY CUTTING CHIP LENGTH LEVEL CURRENTLY
SELECTED ON OPERATION PANEL.

S4

READ VALUE OF OSCILLATION PARAMETER CORRESPONDING
TO IDENTIFIED LENGTH LEVEL.

S5

CALCULATE OSCILLATION FREQUENCY AND OSCILLATION
AMPLITUDE TO GENERATE OSCILLATION OPERATION
COMMAND.

S6

COMBINE GENERATED OSCILLATION OPERATION COMMAND
WITH OPERATION COMMAND FOR TOOL FEED DRIVE UNIT
EXTRACTED IN STEP S2

S7

GENERATE DRIVE SIGNAL CORRESPONDING TO COMBINED
OPERATION COMMAND AND TRANSMIT IT TO TOOL FEED
DRIVE UNIT.

S8

RETURN

FIG. 7

r1  32                                                                33

| PLEASE SELECT<br>CUTTING CHIP LENGTH LEVEL | OPERATION LOAD |
|---|---|
| 32a  Normal | ···LOW LOAD |
| 32b  Short | ···MEDIUM LOAD |
| 32c  Very Short | ···HIGH LOAD |

r2    r3

**FIG. 8**

r1  32                                                                33

| PLEASE SELECT CUTTING CHIP LENGTH LEVEL | G |
|---|---|
| 32a  Normal  ···1 BREAKING/2 ROTATIONS | FEED  OSCILLATION |
| 32b  Short  ···3 BREAKING/2 ROTATIONS | |
| 32c  Very Short  ···5 BREAKING/2 ROTATIONS | |
| 32d  Manual | |

r2    r3

**FIG. 9**

32e

34

ENTER CUTTING CHIP BREAKING COUNT PER 2 ROTATION
OF WORKPIECE

FIG. 10

**35**

BACKGROUND EDITING   WORK CHIP BREACKING

CYCLE INPUT   ADD NEW

TOOL CONDITIONS

| | | | | |
|---|---|---|---|---|
| **35a** TOOL NAME | **35b** MACHINING | **35c** TOOL ID | **35d** T CODE | **35e** CUTTING SPEED |
| GENERAL-PURPOSE OUTER DIAMETER | ROUGH | 1000 | 202 | 300 |
| **35f** FEED | **35g** DEPTH OF CUT | **35h** COMMAND POINT | **35i** NOSE R | **35j** CUTTING EDGE ANGLE |
| 0.300 | 3.000 | 3 | 0.800 | 80.000 |
| **35k** POCKET ANGLE | **35l** POCKET | **35m** REGION DESIGNATION | **35n** BACK-OFF/ RELIEF | **35o** CHIP BREAKING |
| 5.000 | NOT POSSIBLE | NOT DESIGNATED | STANDARD | ENABLED |
| **35p** REFERENCE MACHINING CONDITION | **35q** REFERENCE ROTATION SPEED | **35r** OSCILLATION AXIS (TP, ARC) | **35s(32)** FREQUENCY RATIO | **35t** AMPLITUDE RATIO |
| ROTATION SPEED | AUTOMATIC CALCULATION | NONE (V0.) | NORMAL(0.5) | 1.4 |

NORMAL(0.5)
SHORT   (1.5)
VERY SHORT(2.5)

**35u** MAXIMUM LOAD VALUE

SHAPE POCKET ANGLE   0.000

1
2
3

ROTATION

**35w**

FREQUENCY RATIO

1 : NORMAL(0.5)
2 : SHORT   (1.5)
3 : VERY SHORT   (2.5)
ARBITRARY INPUT

**35x**

TOOL POSITION                **35v**

| RETURN POINT X | RETURN POINT Z | VIA ROW 1X | VIA ROW 1Z | APPROACH X |
|---|---|---|---|---|
| | | | | |

| ADD | TOOL SEARCH | TOOL AUTO | TOOL MANAGEMENT |
|---|---|---|---|

**FIG. 11**

FIG. 12

EP 4 592 779 A1

FIG. 13A

37

**WORKPIECE OFFSET** ≡

| | COMMON | | | G54 | G55 |
|---|---|---|---|---|---|
| X | 0.000 | X | | 0.000 | 0.000 |
| Z | 0.000 | Z | | −185.317 | −215.817 |
| C | 0.000 | C | | 45.000 | 0.000 |
| Y | 0.000 | Y | | 0.000 | 0.000 |
| B | 0.000 | B | | 0.000 | 0.000 |
| | | | | −181.817 | |

**CHIP BREAKING** ≡

○ SAFE  ● DANGER

F0.50 R:100%

ROTATION SPEED [rev/min]: 3000 2500 2000 1500 1000 500 0
FEED [mm/rev]: 0 0.1 0.2 0.3 0.4 0.5

| ROTATION SPEED | 2000 | rev /min |
|---|---|---|
| FEED | 0.3000 | mm /rev |

| CUTTING CHIP BREAKING LENGTH (l) | NORMAL ▼ |
|---|---|
| AMPLITUDE RATIO (K) | 1.20 |

CHIP BREACKING

CYCLE INPUT   TOOL SETTING

SELECTION LOG
TURNING
GENERAL PURPOSE
OUTER DIAMETER
CYCLE MENU
SHAPE SETTING
MACHINING SETTING
TOOL SETTING (2)
GENERAL-PURPOSE OUTER DIAMETER-ROUGH
GENERAL-PURPOSE OUTER DIAMETER-FINISH

TOOL CONDITIONS

| TOOL NAME 35a | MACHINING 35b | TOOL ID 35c | T CODE 35d | CUTTING SPEED 35e |
|---|---|---|---|---|
| GENERAL-PURPOSE OUTER DIAMETER | ROUGH | 1000 | 202 | 300 |

| FEED 35f | DEPTH OF CUT 35g | COMMAND POINT 35h | NOSE R 35i | CUTTING EDGE ANGLE 35j |
|---|---|---|---|---|
| 0.300 | 3.000 | 3 | 0.800 | 80.000 |

| POCKET ANGLE 35k | POCKET 35l | REGION DESIGNATION 35m | BACK-OFF/ RELIEF 35n | CHIP BREAKING 35o |
|---|---|---|---|---|
| 5.000 | NOT POSSIBLE | NOT DESIGNATED | STANDARD | ENABLED |

| REFERENCE MACHINING CONDITION 35p | REFERENCE ROTATION SPEED 35q | OSCILLATION AXIS (TP, ARC) 35r | FREQUENCY RATIO 35s(32) | AMPLITUDE RATIO 35t |
|---|---|---|---|---|
| ROTATION SPEED | AUTOMATIC CALCULATION | NONE (V0.) | NORMAL(0.5) | 1.4 |

NORMAL (0.5)
SHORT  (1.5)
VERY SHORT(2.5)

MAXIMUM LOAD VALUE 35u

TOOL POSITION   35v

| RETURN POINT X | RETURN POINT Z | VIA ROW 1X | VIA ROW 1Z | APPROACH X |
|---|---|---|---|---|
| | | | | |

CANCEL   SAVE   SAVE

ADD CYCLE   TOOL SEARCH   TOOL AUTO   TOOL MANAGEMENT

35w

1
2
3
ROTATION

35x

FREQUENCY RATIO
1 : NORMAL(0.5)
2 : SHORT  (1.5)
3 : VERY SHORT(2.5)
4 : ARBITRARY INPUT

NC PROGRAM   35z

35

EP 4 592 779 A1

37

**WORKPIECE OFFSET** ≡

| | COMMON | | G54 | G55 |
|---|---|---|---|---|
| X | 0.000 | X | 0.000 | 0.000 |
| Z | 0.000 | Z | −185.317 | −215.817 |
| C | 0.000 | C | 45.000 | 0.000 |
| Y | 0.000 | Y | 0.000 | 0.000 |
| B | 0.000 | B | 0.000 | 0.000 |
| | | | −181.817 | |

**CHIP BREAKING** ≡

○ SAFE ● DANGER

ROTATION SPEED  1469  rev /min

FEED  0.3000  mm /rev

CUTTING CHIP BREAKING LENGTH (I)  NORMAL ▼

AMPLITUDE RATIO (K)  1.20

I:0.50 R:100%

ROTATION SPEED [rev/min]: 3000 2500 2000 1500 1000 500 0
FEED [mm/rev]: 0 0.1 0.2 0.3 0.4 0.5

## CHIP BREACKING

CYCLE INPUT   TOOL SETTING

SELECTION LOG

TURNING

GENERAL PURPOSE

OUTER DIAMETER

CYCLE MENU

SHAPE SETTING

MACHINING SETTING

TOOL SETTING (2)

GENERAL-PURPOSE OUTER DIAMETER-ROUGH

GENERAL-PURPOSE OUTER DIAMETER-FINISH

TOOL CONDITIONS

| TOOL NAME ~35a | MACHINING ~35b | TOOL ID ~35c | T CODE ~35d | CUTTING SPEED ~35e |
|---|---|---|---|---|
| GENERAL-PURPOSE OUTER DIAMETER | ROUGH | 1000 | 202 | 300 |

| FEED ~35f | DEPTH OF CUT ~35g | COMMAND POINT ~35h | NOSE R ~35i | CUTTING EDGE ANGLE ~35j |
|---|---|---|---|---|
| 0.300 | 3.000 | 3 | 0.800 | 80.000 |

| POCKET ANGLE ~35k | POCKET ~35l | REGION DESIGNATION ~35m | BACK-OFF/ RELIEF ~35n | CHIP BREAKING ~35o |
|---|---|---|---|---|
| 5.000 | NOT POSSIBLE | NOT DESIGNATED | STANDARD | ENABLED |

| REFERENCE MACHINING CONDITION | REFERENCE ROTATION SPEED ~35p | OSCILLATION AXIS (TP, ARC) ~35q | FREQUENCY RATIO ~35r | AMPLITUDE RATIO ~35s(32) ~35t |
|---|---|---|---|---|
| ROTATION SPEED | AUTOMATIC CALCULATION | NONE (V0,) | NORMAL(0.5) | 1.4 |

NORMAL 0.5
SHORT (1.5)
VERY SHORT(2.5)

MAXIMUM LOAD VALUE ~35u

TOOL POSITION   35v

| RETURN POINT X | RETURN POINT Z | VIA ROW 1 X | VIA ROW 1 Z | APPROACH X |
|---|---|---|---|---|
| | | | | |

CANCEL  SAVE  SAVE

ADD CYCLE  TOOL SEARCH  TOOL AUTO  TOOL MANAGEMENT

NC PROGRAM

1
2
3
ROTATION
**35w**

FREQUENCY RATIO
1 : NORMAL(0.5)
2 : SHORT (1.5)
3 : VERY SHORT(2.5)
4 : ARBITRARY INPUT
**35x**

35
35z

## FIG. 13B

```
72  (3-2, GAIKEI,SHIAGE,R0.400,T404);
73  G28V0;
74  M69;
75  G99G18M46;
76  G50S2000;
77  G54;
78  G0T040;
79  M8;
80  G96S400M3;
81  G0X104.Z2.;
82  X45.2;
83  G985 A10. F65.535 V0. I0.5 K1.40 R228;
84  G1Z0F.14;
85  G985 A10. F65.535 V2. I0.5 K1.40 R228;
86  G3X50.Z-2.4R2.4;
87  G985 A10. F65.535 V0. I0.5 K1.40 R228;
              ·
              ·
              ·
              ·
```

FIG. 14

**36**　**36a**　**36b**　**36j**

| 1_SHINDO-TEST | | | G985 | CHIP BREAKING CYCLE<br>G985 A S(F)_V_I_K_R | SHOW ALL | BACK | INSERT |

```
72   (3-2, GAIKEI,SHIAGE,R0.400,T404);
73   G28V0;
74   M69;
75   G99G18M46;
76   G50S2000;
77   G54;
78   G0T040;
79   M8;
80   G96S400M3;
81   G0X104.Z2.;
82   X45.2;
83   G985 A10. F65.535 V0. I0.5 K1.40 R228;
84   G1Z0F.14;
85   G985 A10. F65.535 V2. I0.5 K1.40 R228;
86   G3X50.Z-2.4R2.4;
87   G985 A10. F65.535 V0. I0.5 K1.40 R228;
```

N [ 13 ] ( [                                    ] )

| A | 36d — [        ] |
| S ▼ | 36e — [ 2000 ] |
| V | 36f — [        ] |
| I | 36g — [ 0.5 ] |
| K | 36h — [ 1.2 ] |
| R | 36i — [        ] |

回転

**36c**

**36k**

| GUIDANCE | PROGRAM | | SAVE |

**36m**

FIG. 15

FIG. 16

## INTERNATIONAL SEARCH REPORT

| International application No. |
|---|
| **PCT/JP2023/038153** |

**A. CLASSIFICATION OF SUBJECT MATTER**

*G05B 19/409*(2006.01)i; *B23B 1/00*(2006.01)i; *B23Q 17/00*(2006.01)i; *G05B 19/4093*(2006.01)i
FI: G05B19/409 C; G05B19/4093 M; B23Q17/00 D; B23B1/00 D; B23B1/00 N; B23B1/00 A; B23Q17/00 E

According to International Patent Classification (IPC) or to both national classification and IPC

**B. FIELDS SEARCHED**

Minimum documentation searched (classification system followed by classification symbols)

G05B19/409; B23B1/00; B23Q17/00; G05B19/4093

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/014517 A1 (YAMAZAKI MAZAK CORP) 28 January 2021 (2021-01-28) paragraphs [0081]-[0171] | 1-7 |
| Y | WO 2022/085114 A1 (MITSUBISHI ELECTRIC CORP) 28 April 2022 (2022-04-28) paragraphs [0013], [0021]-[0024] | 1-7 |
| A | WO 2021/145378 A1 (FANUC CORPORATION) 22 July 2021 (2021-07-22) paragraphs [0020], [0043] | 1-7 |
| A | US 2009/0107308 A1 (WOODY et al.) 30 April 2009 (2009-04-30) fig. 1-2 | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/038153** |

**Box No. III      Observations where unity of invention is lacking (Continuation of item 3 of first sheet)**

This International Searching Authority found multiple inventions in this international application, as follows:

Document 1: WO 2021/014517 A1 (YAMAZAKI MAZAK CORP) 28 January 2021 (2021-01-28), paragraphs [0081]-[0171] & US 2022/0004158 A1, paragraphs [0032]-[0144] & EP 3859464 A1 & CN 113518953 A & JP 6654740 B1

(Invention 1) Part related to an "NC program creation device that creates an NC program executed by a machine tool that generates a chip when a workpiece is cut, the NC program creation device comprising: a reception unit that receives a selection instruction selecting a length of the chip; and a creation unit that creates an NC program including a G code or an M code for performing cutting while generating a chip having the selected length on the basis of the selection instruction" in claim 1 and claim 7
 Claim 1 and claim 7 dependent on claim 1 have the special technical feature of an "NC program creation device that creates an NC program executed by a machine tool that generates a chip when a workpiece is cut, the NC program creation device comprising: a reception unit that receives a selection instruction selecting a length of the chip; and a creation unit that creates an NC program including a G code or an M code for performing cutting while generating a chip having the selected length on the basis of the selection instruction," and are thus classified as invention 1.

(Invention 2) Part not classified as invention 1 in claims 2-6 and claim 7
 Claims 2-6 share, with claim 1 classified as invention 1, the common technical feature of "creating an NC program." However, said technical feature does not make a contribution over the prior art in light of the disclosure of documents 1 (in particular, see paragraphs [0166]-[0171]), and thus cannot be said to be a special technical feature. There are no other same or corresponding special technical features between these inventions.
 Claims 2-6 are not dependent on claim 1. Claims 2-6 are not substantially identical to or similarly closely related to any of the claims classified as invention 1.
 Therefore, claims 2-6 cannot be classified as invention 1.
 Claims 2-6 have the special technical feature of an "NC program creation device that creates the NC program used in a machine tool including: a tool holding unit that holds a tool; ...., wherein the program creation unit creates an NC program including an NC code for executing vibration cutting operation corresponding to selection information input from the data input unit," and are thus classified as invention 2.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest and, where applicable, the payment of a protest fee.

        ☐   The additional search fees were accompanied by the applicant's protest but the applicable protest fee was not paid within the time limit specified in the invitation.

        ☐   No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/038153**

| Patent document cited in search report | | | Publication date (day/month/year) | Patent family member(s) | | | Publication date (day/month/year) |
|---|---|---|---|---|---|---|---|
| WO | 2021/014517 | A1 | 28 January 2021 | US | 2022/0004158 | A1 | |
| | | | | paragraphs [0032]-[0144] | | | |
| | | | | EP | 3859464 | A1 | |
| | | | | CN | 113518953 | A | |
| | | | | JP | 6654740 | B1 | |
| WO | 2022/085114 | A1 | 28 April 2022 | CN | 115884847 | A | |
| | | | | JP | 6984790 | B1 | |
| WO | 2021/145378 | A1 | 22 July 2021 | US | 2023/0033414 | A1 | |
| | | | | paragraphs [0044], [0072] | | | |
| | | | | CN | 114981739 | A | |
| US | 2009/0107308 | A1 | 30 April 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017051745 A